Europäisches Patentamt

European Patent Office

Office européen des brevets

(19)

(11) **EP 1 445 172 A1**

(12) **EUROPÄISCHE PATENTANMELDUNG**

(43) Veröffentlichungstag:
   **11.08.2004  Patentblatt 2004/33**

(51) Int Cl.⁷: **B62D 15/02**, G01D 5/04,
   G01D 5/14

(21) Anmeldenummer: **04001272.6**

(22) Anmeldetag: **22.01.2004**

(84) Benannte Vertragsstaaten:
   **AT BE BG CH CY CZ DE DK EE ES FI FR GB GR
   HU IE IT LI LU MC NL PT RO SE SI SK TR**
   Benannte Erstreckungsstaaten:
   **AL LT LV MK**

(30) Priorität: **05.02.2003  DE 10305592**

(71) Anmelder: **Valeo Schalter und Sensoren GmbH
   74321 Bietigheim-Bissingen (DE)**

(72) Erfinder:
   • **Ruff, Achim
     74354 Besigheim (DE)**

   • **Wigger, Bernd
     74366 Kirchheim/Neckar (DE)**
   • **Hadobas-Roessel, Katalin
     74321 Bietigheim-Bissingen (DE)**
   • **Kofink, Peter
     70734 Fellbach (DE)**

(74) Vertreter: **Dreiss, Fuhlendorf, Steimle & Becker
   Patentanwälte,
   Postfach 10 37 62
   70032 Stuttgart (DE)**

(54) **Lenkradwinkelsensor und Verfahren zum Bestimmen des absoluten Lenkwinkels eines Lenkrades**

(57)    Die Erfindung betrifft einen bekannten Lenkwinkelsensor und ein bekanntes Verfahren zum Bestimmen des absoluten Lenkradwinkels eines Lenkrades eines Fahrzeugs. Bei den bekannten Lenkwinkelsensoren erfolgt die Berechnung des absoluten Lenkradwinkels durch Auswerten des Codes einer mit der Lenksäule gekoppelten Codescheibe im Hinblick auf die Winkelstellung des Lenkrades innerhalb einer bestimmten vollen Umdrehung des Lenkrades und durch zusätzliche
Auswertung der Winkelstellung eines Zählrades, welches bei der Drehung des Lenkrades mit einer konstanten und gleichförmigen Übersetzung von der Lenksäule
oder der Codescheibe angetrieben wird, im Hinblick auf
volle Umdrehungen des Lenkrades. Diese Vorgehensweise hat jedoch den Nachteil, dass die damit mögliche
Winkelauflösung für den Lenkradwinkel nur gering ist.
Um diese Winkelauflösung zu verbessern, wird erfindungsgemäß vorgeschlagen, die Winkelstellung des
Zählrades zusätzlich auch innerhalb einer Umdrehung
des Zählrades auszuwerten und diese erfasste präzisierte Winkelstellung des Zählrades für die Berechnung
des absoluten Lenkradwinkels zu verwenden.

Fig. 3

EP 1 445 172 A1

**Beschreibung**

Die Erfindung betrifft einen Lenkwinkelsensor und ein Verfahren zum Bestimmen des absoluten Lenkradwinkels eines Lenkrades eines Fahrzeugs sowie ein Computerprogramm für eine Auswerteeinheit des Lenkwinkelsensors und die Auswerteeinheit selber.

Derartige Lenkwinkelsensoren und Verfahren sind im Stand der Technik, insbesondere aus der DE 101 10 785 A1 bekannt.

Der dort offenbarte Lenkwinkelsensor umfasst eine um den Drehpunkt einer Lenksäule drehbar gelagerte und mit der Lenksäule fest verbundene Codescheibe, die den Drehwinkel eines Lenkrades eines Fahrzeuges innerhalb einer Umdrehung erfasst. Weiterhin umfasst der Lenkwinkelsensor ein Zählrad, welches bei der Drehung des Lenkrades und der Lenksäule mit einer konstanten und gleichförmigen Übersetzung von der Lenksäule oder der Codescheibe angetrieben wird. Die Winkelstellung des Zählrades wird mit Hilfe von Sensoren erfasst, die aufgrund ihrer Anordnung gegenüber dem Zählrad um 90° zueinander phasenversetzte Ausgangssignale erzeugen. Eine Auswerteeinheit berechnet aus diesen Ausgangssignalen zunächst die vollen Umdrehungen des Lenkrades. Nachfolgend berechnet sie daraus, unter zusätzlicher Berücksichtigung des Drehwinkels des Lenkrads innerhalb einer Umdrehung, den absoluten Lenkradwinkel, der auch größer als 360° sein kann.

Diese bisher praktizierte Vorgehensweise zur Bestimmung des absoluten Lenkradwinkels $\omega$ des Lenkrades hat den Nachteil, dass die Bestimmung des absoluten Lenkradwinkels nur mit einer Winkelauflösung von ca. 1,5° erfolgen kann. Derartige Winkelauflösungen waren zwar für die bisherigen Anwendungen ausreichend; zukünftige Anwendungen erfordern jedoch eine wesentlich verbesserte Auflösung des Lenkradwinkels.

Ausgehend von diesem Stand der Technik liegt der Erfindung die Aufgabe zugrunde, das bekannte Verfahren und den bekannten Lenkwinkelsensor zur Bestimmung des absoluten Lenkradwinkels eines Fahrzeugs derart weiterzubilden, dass die Auflösung für den Lenkradwinkel wesentlich verbessert wird, ohne dass der bisher verwendete Lenkwinkelsensor dafür im Hinblick auf seinen Hardwareaufbau wesentlich verändert werden muss.

Diese Aufgabe wird durch den Gegenstand des Patentanspruchs 1 gelöst.

Genauer gesagt sieht die Erfindung vor, dass die Auswerteeinrichtung des Lenkwinkelsensors weiterhin ausgebildet ist, die Ausgangssignale der Sensoren auch im Hinblick auf die präzise Winkelstellung $\psi$ des Zählrades innerhalb einer Umdrehung des Zählrades auszuwerten und diese präzisierte Winkelstellung des Zählrades für die Berechnung des absoluten Lenkradwinkels $\omega$ zu verwenden.

Der Kerngedanke der Erfindung liegt also darin, die beiden Ausgangssignale der Sensoren nicht nur wie bisher im Hinblick auf volle Umdrehungen des Lenkrades, sondern auch im Hinblick auf die präzise Winkelstellung $\psi$ innerhalb einer Umdrehung des Zählrades auszuwerten. Diese zusätzliche Information wird erfindungsgemäß bei der Berechnung des absoluten Lenkradwinkels $\omega$ dazu verwendet, dessen Winkelauflösung wesentlich zu verbessern.

Vorteilhafterweise erfolgt die Ermittlung der präzisierten Winkelstellung $\psi$ des Zählrades mit Hilfe einer Analog/Digitalwandlereinheit 26 innerhalb der Auswerteeinheit 25 in der Weise, dass der von den Sensoren und durch dessen Ausgangssignal repräsentierte analoge Verlauf der Winkelstellung $\psi$ des Zählrades mit einem vorgebbaren Quantisierungsfaktor digitalisiert wird. Anders ausgedrückt:
Je nach Größe des verwendeten Quantisierungsfaktors lässt sich nicht nur die Auflösung der Winkelstellung $\psi$ des Zählrades, sondern damit einhergehend auch die Winkelauflösung des absoluten Lenkradwinkels $\omega$ des Lenkrades erhöhen.

Die oben genannte Aufgabe der Erfindung wird weiterhin durch ein Verfahren zum Bestimmen des absoluten Lenkradwinkels des Lenkrades eines Fahrzeugs sowie durch ein Computerprogramm und durch eine Auswerteeinheit des Lenkwinkelsensors und die Auswerteeinheit selber gelöst. Die Vorteile dieser anderen Lösungen entsprechen den oben für den erfindungsgemäßen Lenkwinkelsensor genannten Vorteilen.

Weitere vorteilhafte Ausgestaltungen des Lenkwinkelsensors und der anderen Lösungen der Aufgabe sind Gegenstand der Unteransprüche.

Die Erfindung wird nachfolgend unter Bezugnahme auf die der Beschreibung beigefügten Figuren in Form von Ausführungsbeispielen detailliert beschrieben.

In der Zeichnung zeigen:

Figur 1     die Auswerteeinheit gemäß der Erfindung;

Figur 2     das Verfahren gemäß der Erfindung;

Figur 3     den Aufbau eines Lenkwinkelsensors gemäß dem Stand der Technik;

Figur 4     den Phasenverlauf von Ausgangssignalen von Sensoren; und

Figur 5    den Verlauf verschiedener Winkelstellungen eines Zählrades des Lenkwinkelsensors.

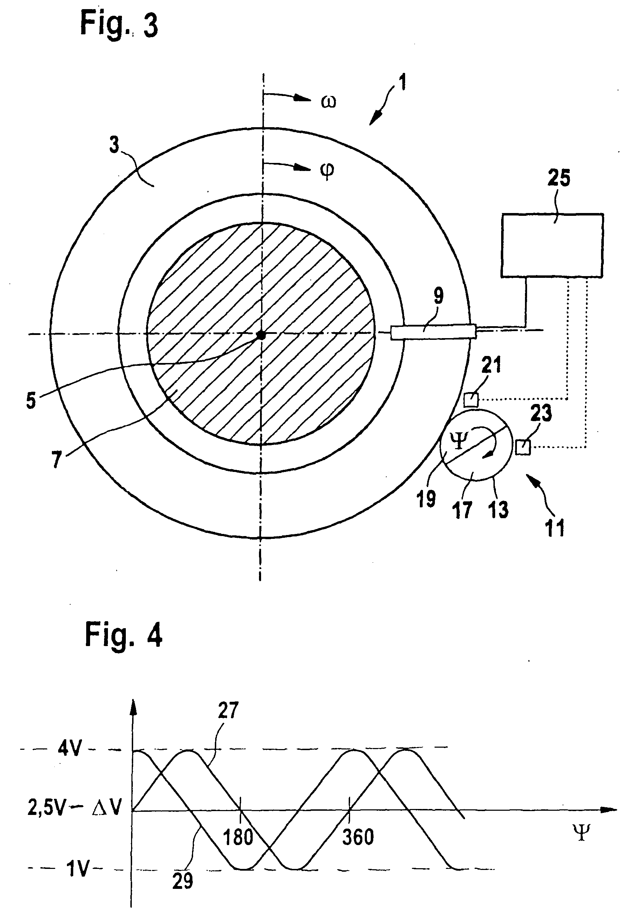

Figur 3 zeigt einen bekannten offenbarten Lenkwinkelsensor 1. Er umfasst eine um den Drehpunkt 5 einer Lenksäule drehbar gelagerte und mit der Lenksäule fest verbundene Codescheibe 3, die den Drehwinkel φ eines Lenkrades eines Fahrzeugs innerhalb einer Umdrehung erfasst. Diese Erfassung des Drehwinkels φ des Lenkrades erfolgt mit Hilfe einer Abtasteinheit 9, welche zu diesem Zweck den Code der Codescheibe 3 abtastet. Weiterhin umfasst der Lenkwinkelsensor ein Zählrad 13, welches bei der Drehung des Lenkrades und der Lenksäule 7 mit einer konstanten und gleichförmigen Übersetzung von der Lenksäule 7 oder der Codescheibe 3 angetrieben wird. Die Winkelstellung ψ des Zählrades wird mit Hilfe von Sensoren 21, 23 erfasst. Genauer gesagt sind die Sensoren in einem Winkel von 90° entlang des Umfanges des Zählrades 13 phasenversetzt angeordnet und erzeugen jeweils - wie in Figur 4 dargestellt - sinusförmige Ausgangssignale 27, 29, die aufgrund der phasenversetzten Anordnung der Sensoren 21, 23 ebenfalls um 90° phasenversetzt sind.

Weiterhin umfasst der bekannte Lenkwinkelsensor 1 eine Auswerteeinheit 25 zur Berechnung des absoluten Lenkradwinkels ω, der die gesamte Umdrehung des Lenkrades gegenüber einer Nulllage repräsentiert, also auch Werte über 360° hinaus annehmen kann. Demgegenüber repräsentiert die Winkelstellung φ des Lenkrades, die identisch ist mit der Winkelstellung φ der Lenkradsäule oder der Codescheibe, weil alle drei Komponenten mechanisch fest miteinander verbunden sind, lediglich die Winkelstellung des Lenkrades innerhalb einer Umdrehung gegenüber einer Nulllage; sie kann also lediglich Werte zwischen 0° und 360° annehmen. Zur Berechnung des absoluten Lenkradwinkels ω werden der Auswerteeinheit 25 sowohl das Ausgangssignal der Abtasteinheit 9 wie auch die Ausgangssignale 27, 29 der Sensoren zugeführt. Aus letzteren berechnet die Auswerteeinheit 25 einen Verlauf der Winkelstellung ψ des Zählrades über dem absoluten Lenkradwinkel ω, zum Beispiel mit Hilfe des bekannten mathematischen Cordic-Algorithmus.

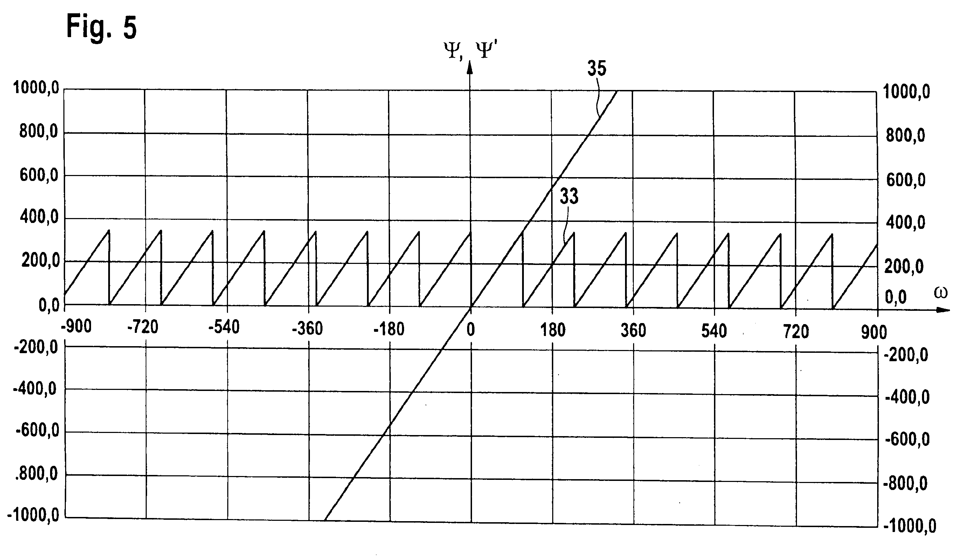

In Figur 5 ist zu erkennen, dass dieser Verlauf sägezahnförmig ist, was darin begründet liegt, dass die Winkelstellung ψ jeweils immer nur den Winkel innerhalb einer Umdrehung des Zählrades repräsentiert. Der absolute, aufsummierte Winkel ψ' des Zählrades ist in Figur 5 ausschnittsweise als Gerade dargestellt.

Die Auswerteeinheit 25 berechnet dann nachfolgend den absoluten Lenkradwinkel ω des Lenkrades durch Auswerten des Verlaufs im Hinblick auf volle Umdrehungen des Lenkrades und durch Auswerten des Ausgangssignals der Abtasteinheit 9 im Hinblick auf die Winkelstellung φ des Lenkrades innerhalb einer von den Ausgangssignalen 27, 29 der Sensoren repräsentierten vollen Umdrehung des Lenkrades.

Der wesentliche Unterschied des erfindungsgemäßen Lenkwinkelsensors 1 zu dem bisher beschriebenen bekannten Lenkwinkelsensor liegt darin, dass bei dem erfindungsgemäßen Lenkwinkelsensor die Auswerteeinheit 25 weiterhin ausgebildet ist, die in Figur 4 gezeigten Ausgangssignale 27 und 29 der Sensoren 21 und 23 auch im Hinblick auf die präzise Winkelstellung ψ des Zählrades 13 innerhalb einer Umdrehung des Zählrades 13 auszuwerten und diese präzisierte Winkelstellung ψ des Zählrades 13 für die Berechnung des absoluten Lenkradwinkels ω zu verwenden.

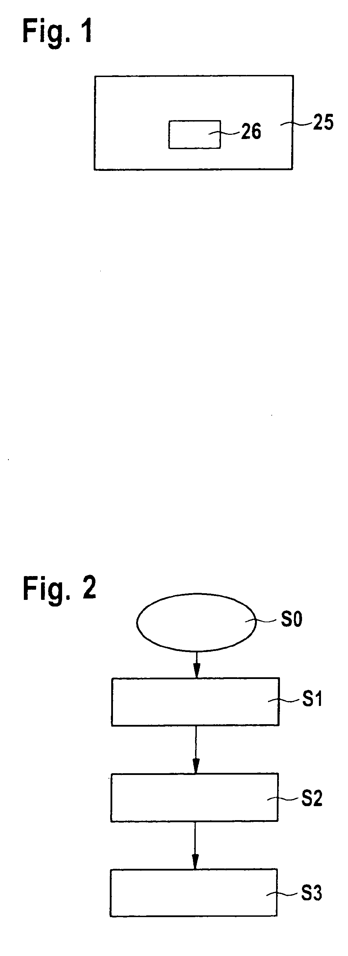

Vorzugsweise erfolgt die präzise Auswertung der Winkelstellung ψ des Zählrades innerhalb einer Umdrehung des Zählrades 13 mit Hilfe einer Analog/Digitalwandlereinheit 26, wie sie in Figur 1 dargestellt ist. Je nach Güte, das heißt Größe des Quantisierungsfaktors der verwendeten Analog/Digitalwandlereinheit ist es auf diese Weise möglich, nicht nur die Winkelstellung ψ des Zählrades 13 innerhalb einer Umdrehung des Zählrades, sondern damit einhergehend auch die Auflösung des absoluten Lenkradwinkels ω wesentlich zu verbessern. Dies sei nachfolgend unter Bezugnahme auf Figur 4 näher erläutert. Wie oben bereits ausgeführt, zeigt Figur 4 die Ausgangssignale 27 und 29 der Sensoren 21 und 23. Genauer gesagt handelt es sich bei den Ausgangssignalen um Spannungsverläufe, welche den in Figur 5 gezeigten Verlauf der Winkelstellung ψ des Zählrades repräsentieren.

Beispielhaft wird nachfolgend gezeigt, mit welcher Genauigkeit/Auflösung δψ die Winkelstellung ψ bei Verwendung einer Analog/Digitalwandlereinheit 26 mit einem Quantisierungsfaktor von 8 Bit berechnet werden kann.

Die Berechnung erfolgt gemäß der folgenden Formel (1):

$$\delta\Psi = \arctan\left(\frac{a}{\frac{\Delta V}{2}}\right) \qquad (1),$$

wobei

$\Delta V$     eine Spitze/Spitze-Spannung;

a     die Auflösung der Analog/Digitalwandlereinheit; und

$\delta\psi$     die Auflösung für die präzisierte Winkelstellung $\psi$

repräsentiert.

Angewendet auf den in Figur 4 gezeigten Spannungsverlauf ergeben sich für die einzelnen Variablen folgende Werte:

$\Delta V = 3$ V; a = 0,0196078 V bei Verwendung einer 8-bit A/D-Wandlereinheit und $\delta\psi = 0,749\,°$.

Bei Berücksichtigung des jeweils aktuell verwendeten Übersetzungsverhältnisses n zwischen dem Zählrad 13 und der Codescheibe 3 beziehungsweise der Lenksäule 5 lässt sich aus der berechneten Auflösung $\delta\psi$ für die Winkelstellung $\psi$ sehr einfach auch die Auflösung $\delta\omega$ für den absoluten Lenkradwinkel $\omega$ gemäß folgender Formel (2) berechnen

$$\delta\omega = \delta\psi : n \tag{2}.$$

Bei einem angenommenen Übersetzungsverhältnis von n = 2,8333 ergibt sich damit für die oben berechnete Auflösung $\delta\psi$ der Winkelstellung $\psi$ von $\delta\psi = 0,749\,°$ eine Auflösung für den absoluten Lenkradwinkel von $\delta\omega = 0,264\,°$.

In Figur 2 sind abschließend noch einmal die wesentlichen Schritte des erfindungsgemäßen Verfahrens kurz zusammengefasst. Demnach sieht das erfindungsgemäße Verfahren vor, im Anschluss an einen Startschritt S0 zunächst in einem Schritt S1 die Winkelstellung $\varphi$ des Lenkrades beziehungsweise der Codescheibe innerhalb einer Umdrehung des Lenkrades zu erfassen. In einem nachfolgenden Schritt S2 ist vorgesehen, die Winkelstellung $\psi$ eines mit dem Lenkrad beziehungsweise der Lenksäule 7 über eine konstante und gleichförmige Übersetzung gekoppelten Zählrades 13 zu erfassen. Schließlich ist in Verfahrensschritt 3 vorgesehen, den absoluten Lenkradwinkel $\omega$ aus der Winkelstellung $\varphi$ der Codescheibe 3 innerhalb einer Umdrehung des Lenkrades beziehungsweise der Lenksäule 7 und bezüglich den vollen Umdrehungen des Lenkrades aus der Winkelstellung $\psi$ des Zählrades 13 zu ermitteln. Dabei ist erfindungsgemäß vorgesehen, dass für die Ermittlung des absoluten Lenkradwinkels $\omega$ zusätzlich auch die präzisierte Winkelstellung $\psi$ des Zählrades innerhalb einer Umdrehung des Zählrades ausgewertet wird. Die Berechnung der präzisen Winkelstellung $\psi$ des Zählrades und die daraus resultierende erhöhte Auflösung $\delta\omega$ für den absoluten Lenkradwinkel wurden oben beispielhaft unter Bezugnahme auf Figur 4 erläutert. Dieses erfindungsgemäße Verfahren kann in Form einer Hardwareschaltung oder eines Computerprogramms oder einer Kombination von beidem realisiert werden.

Das Computerprogramm kann gegebenenfalls zusammen mit weiteren Computerprogrammen, die andere Funktionen erfüllen, auf einem computerlesbaren Datenträger abgespeichert sein. Dabei kann es sich um eine Diskette, eine Compact-Disc (sogenannte CD), einen Flash-Memory oder dergleichen handeln. Die auf dem Datenträger abgespeicherten Computerprogramme können dann als Produkt an einen Kunden verkauft werden.

Ebenfalls ist es im Falle einer Softwarerealisierung möglich, das der Figur 2 entsprechende Computerprogramm gegebenenfalls zusammen mit den weiteren Computerprogrammen - ohne die Zuhilfenahme eines elektronischen Speichermediums - über ein elektronisches Kommunikationsnetzwerk als Produkt an einen Kunden zu übertragen und auf diese Weise zu verkaufen. Bei dem Kommunikationsnetzwerk kann es sich dabei insbesondere um das Internet handeln.

**Patentansprüche**

1. Lenkwinkelsensor (1), mit einer drehbar gelagerten, den Drehwinkel eines Lenkrades eines Fahrzeugs wiedergebenden Codescheibe (3), einer den Code der Codescheibe (3) abtastenden Abtasteinheit (9) zur Bestimmung der Winkelstellung ($\varphi$) des Lenkrades bzw. der Lenksäule (7) innerhalb einer Umdrehung, einem Zählrad (13), welches bei der Drehung des Lenkrades mit einer konstanten und gleichförmigen Übersetzung von der Lenksäule (7) oder der Codescheibe (3) angetrieben wird, Sensoren (21, 23) zur Bestimmung der Winkelstellung ($\psi$) des Zählrades (13), und

    einer Auswerteeinheit (25) zur Berechnung des absoluten Lenkradwinkels ($\omega$) durch Auswerten von Ausgangssignalen der Sensoren (21, 23) im Hinblick auf volle Umdrehungen des Lenkrades und durch Auswerten eines Ausgangssignals der Abtasteinheit (9) im Hinblick auf die Winkelstellung ($\varphi$) des Lenkrades innerhalb einer von den Ausgangssignalen der Sensoren (21, 23) repräsentierten vollen Umdrehung des Lenkrades;

    **dadurch gekennzeichnet, dass**

    die Auswerteeinrichtung (25) weiterhin ausgebildet ist, die Ausgangssignale (27, 29) der Sensoren (21, 23) auch im Hinblick auf die präzise Winkelstellung ($\psi$) des Zählrades (13) innerhalb einer Umdrehung des Zählrades (13)

auszuwerten und diese präzisierte Winkelstellung (ψ) des Zählrades (13) für die Berechnung des absoluten Lenkradwinkels (ω) zu verwenden.

2. Lenkwinkelsensor (1) nach Anspruch 1, **dadurch gekennzeichnet, dass** die Auswerteeinheit (25) eine Analog-/Digitalwandlereinheit (26) aufweist mit einem vorgebbaren Quantisierungsfaktor zum Ermitteln der präzisierten Winkelstellung(ψ) des Zählrades (13).

3. Lenkwinkelsensor (1) nach Anspruch 1, **dadurch gekennzeichnet, dass** das Zählrad (13) als Zahnrad, Reibrad bzw. Zugrad eines Zahnrad-, Reibrad- bzw. Zugmittelgetriebes ausgebildet ist.

4. Lenkwinkelsensor (1) nach einem der vorangegangenen Ansprüche, **dadurch gekennzeichnet, dass** die Ausgangssignale (27, 29) der Sensoren (21, 23) sinus- und/oder cosinusförmig sind.

5. Lenkwinkelsensor (1) nach Anspruch 4, **dadurch gekennzeichnet, dass** das Zählrad zwei Winkelsegmente (17, 19) mit jeweils 180° aufweist und die beiden Sensoren (21, 23) in einem Phasenversatz von 90° zueinander angeordnet sind.

6. Lenkwinkelsensor (1) nach Anspruch 5, **dadurch gekennzeichnet, dass** das die Winkelsegmente (17, 19) unterschiedliche Polungen aufweisen und dass die Sensoren (21, 23) als Magnetfeldsensoren ausgebildet sind.

7. Verfahren zum Bestimmen des absoluten Lenkradwinkels (ω) eines Lenkrades eines Fahrzeugs, umfassend folgende Schritte:

   - Erfassen der Winkelstellung (φ) des Lenkrades innerhalb einer Umdrehung des Lenkrades (S1),
   - Erfassen der Winkelstellung (ψ) eines mit dem Lenkrad bzw. der Lenksäule (7) über eine konstante und gleichförmige Übersetzung gekoppelten Zählrades (13) (S2), und
   - Ermitteln des absoluten Lenkradwinkels (ω) aus der Winkelstellung (φ) der Codescheibe (3) innerhalb einer Umdrehung des Lenkrades bzw. der Lenksäule (7) und bezüglich den vollen Umdrehungen des Lenkrades aus der Winkelstellung (ψ) des Zählrades (13) (S3);

   **dadurch gekennzeichnet, dass**
   für die Ermittlung des absoluten Lenkradwinkels (ω) zusätzlich auch die präzise Winkelstellung (ψ) des Zählrades (13) innerhalb einer Umdrehung des Zählrades ausgewertet wird (S3).

8. Verfahren nach Anspruch 7, **dadurch gekennzeichnet, dass** die Ermittlung der präzisen Winkelstellung (33, ψ) des Zählrades (13) innerhalb einer Umdrehung des Zählrades durch Digitalisierung des Verlaufs (33) der Winkelstellung (33, ψ) mit einem vorgebbaren Quantisierungsfaktor erfolgt.

9. Computerprogramm insbesondere für eine Auswerteeinheit (9) in einem Lenkwinkelsensor (1), mit Programmcode, der dazu geeignet ist, das Verfahren nach einem der Ansprüche 7 oder 8 durchzuführen, wenn er auf einem Computer ausgeführt wird.

10. Computerprogramm nach Anspruch 9, **dadurch gekennzeichnet dass** de Programmcode auf einem computerlesbaren Datenträger gespeichert ist.

11. Auswerteeinheit (25) für einen Lenkwinkelsensor (1) mit einer drehbar gelagerten, den Drehwinkel eines Lenkrades eines Fahrzeugs wiedergebenden Codescheibe (3), einer den Code der Codescheibe (3) abtastenden Abtasteinheit (9) zur Bestimmung der Winkelstellung (φ) des Lenkrades bzw. der Lenksäule (7) innerhalb einer Umdrehung, mit einem Zählrad (13), welches bei der Drehung des Lenkrades mit einer konstanten und gleichförmigen Übersetzung von der Lenksäule (7) oder der Codescheibe (3) angetrieben wird, mit Sensoren (21, 23) zur Bestimmung der Winkelstellung (ψ) des Zählrades (13), wobei die Auswerteeinheit (25) zur Berechnung des absoluten Lenkradwinkels (ω) ausgebildet ist durch Auswerten von Ausgangssignalen der Sensoren (21, 23) im Hinblick auf volle Umdrehungen des Lenkrades und durch Auswerten eines Ausgangssignals der Abtasteinheit (9) im Hinblick auf die Winkelstellung (φ) des Lenkrades innerhalb einer von den Ausgangssignalen der Sensoren (21, 23) repräsentierten vollen Umdrehung des Lenkrades;
    **dadurch gekennzeichnet, dass**
    die Auswerteeinrichtung (25) weiterhin ausgebildet, die Ausgangssignale (27, 29) der Sensoren (21, 23) auch im Hinblick auf die präzise Winkelstellung (ψ) des Zählrades (13) innerhalb einer Umdrehung des Zählrades (13)

auszuwerten und diese präzisierte Winkelstellung ($\psi$) des Zählrades (13) für die Berechnung des absoluten Lenkradwinkels ($\omega$) zu verwenden.

**Fig. 1**

25

26

**Fig. 2**

S0

S1

S2

S3

EP 1 445 172 A1

# Fig. 3

# Fig. 4

8

**Fig. 5**

EP 1 445 172 A1

**Europäisches Patentamt**

# EUROPÄISCHER RECHERCHENBERICHT

Nummer der Anmeldung

EP 04 00 1272

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | DE 101 37 098 A (DELPHI TECH INC) 14. Februar 2002 (2002-02-14) * Spalte 1, Zeile 30 - Spalte 5, Zeile 52; Ansprüche 1-18; Abbildungen 1,2 * --- | 1-3,7, 9-11 | B62D15/02 G01D5/04 G01D5/14 |
| X | EP 0 714 171 B (HEIDENHAIN GMBH DR JOHANNES) 29. Mai 1996 (1996-05-29) * Spalte 2, Zeile 48 - Spalte 4, Zeile 4 * * Spalte 4, Zeile 51 - Zeile 55 * * Spalte 6, Zeile 26 - Zeile 29 * * Spalte 7, Zeile 12 - Zeile 19 * * Ansprüche 1,2,11 * * Abbildungen 1,2,5,8 * --- | 1-3,7-11 | |
| A | DE 198 20 014 A (HEIDENHAIN GMBH DR JOHANNES) 11. November 1999 (1999-11-11) * Abbildungen 1-3 * * Spalte 2, Zeile 4 - Zeile 54 * --- | 1-11 | |
| A,D | EP 1 238 891 A (VALEO SCHALTER & SENSOREN GMBH) 11. September 2002 (2002-09-11) * Abbildungen 1-3 * * Ansprüche 1-6 * * Absatz [0008] - Absatz [0012] * * Absatz [0021] * ----- | 1-11 | RECHERCHIERTE SACHGEBIETE (Int.Cl.7) G01D B62D H03M |

Der vorliegende Recherchenbericht wurde für alle Patentansprüche erstellt

| Recherchenort | Abschlußdatum der Recherche | Prüfer |
|---|---|---|
| MÜNCHEN | 17. Mai 2004 | Faber-Jurk, S |

**ANHANG ZUM EUROPÄISCHEN RECHERCHENBERICHT
ÜBER DIE EUROPÄISCHE PATENTANMELDUNG NR.**

EP 04 00 1272

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-05-2004

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| DE 10137098 | A | | 14-02-2002 | US | 6519549 | B1 | 11-02-2003 |
| | | | | DE | 10137098 | A1 | 14-02-2002 |
| EP 0714171 | B | | 29-05-1996 | CH | 690043 | A5 | 31-03-2000 |
| | | | | AT | 201295 | T | 15-06-2001 |
| | | | | DE | 59509261 | D1 | 21-06-2001 |
| | | | | EP | 0714171 | A2 | 29-05-1996 |
| DE 19820014 | A | | 11-11-1999 | DE | 19820014 | A1 | 11-11-1999 |
| | | | | AT | 208491 | T | 15-11-2001 |
| | | | | DE | 29924383 | U1 | 16-01-2003 |
| | | | | DE | 59900413 | D1 | 13-12-2001 |
| | | | | WO | 9957522 | A1 | 11-11-1999 |
| | | | | EP | 1076809 | A1 | 21-02-2001 |
| | | | | JP | 2002513923 | T | 14-05-2002 |
| | | | | US | 6542088 | B1 | 01-04-2003 |
| EP 1238891 | A | | 11-09-2002 | DE | 10110785 | A1 | 26-09-2002 |
| | | | | EP | 1238891 | A1 | 11-09-2002 |

EPO FORM P0461

Für nähere Einzelheiten zu diesem Anhang : siehe Amtsblatt des Europäischen Patentamts, Nr.12/82